# DEMANDE DE BREVET EUROPEEN

(11) **EP 1 613 021 A2**
(43) Date de publication de la demande: **04.01.2006**
(21) Numéro de dépôt: 05290325.9
(22) Date de dépôt: 14.02.2005
(51) Int. Cl.: H04L 29/06, H04M 1/725, H04Q 7/32, H04N 1/00, H04L 12/56, H04M 11/00

(54) **Système pour l'extraction et le défilement automatique de texte en superposition d'image dans un téléphone mobile**

(30) Priorité: 26.03.2004 FR 0403122
(71) Demandeur: Hallalel, Rachid, 92400 Courbevoie (FR)
(72) Inventeur: Hallalel, Rachid, 92400 Courbevoie (FR)

(57) **Abrégé**

La présente invention concerne un système qui a pour principe l'extraction puis le défilement automatique de texte en surbrillance et superposition sur l'image.

L'invention permet l'extraction des données texte d'une image (2) puis le défilement automatique du texte en superposition de l'image (2). Cette opération s'effectue au travers d'un logiciel ou applet de type java, embarqué dans les téléphones mobiles. Le dispositif selon l'invention est particulièrement destiné aux professionnelles comme aux particuliers qui souhaitent lire une quantité importante d'informations sur l'écran d'un téléphone mobile tout en visualisant l'image correspondant à cette information.

## Description

La présente invention concerne un système qui a pour principe l'extraction puis le défilement automatique de texte en surbrillance et superposition sur l'image.
Cette opération s'effectue au travers d'un logiciel ou applet de type java, embarqué dans les téléphones mobiles.

Les téléphones mobiles actuels proposent traditionnellement des solutions permettant d'envoyer ou recevoir des images accompagnées de texte, sous forme de mails, SMS ou MMS.
Lorsqu'un correspondant réceptionne une image accompagnée de texte,il peut visualiser soit le texte ou l'image, mais il est dans l'impossibilité de visualiser l'image et le texte en même temps. Cette impossibilité est principalement due à la taille réduite de l'écran des téléphones mobiles. Ce qui à pour conséquence de ne pas avoir un mode de lecture comparable par exemple, à une page de magazine ou une carte postale qui contient du texte et de l'image sur la même face.

Le dispositif selon l'invention permet de remédier à cet inconvénient. Il comporte selon une première caractéristique, une applet ou logiciel qui est intégré dans le téléphone mobile. L'applet est composé de menu et bouton permettant d'effectuer l'ensemble des fonctionnalités de l'invention.
La principale caractéristique selon l'invention permet à l'utilisateur de réceptionner sur son téléphone mobile une image contenant du texte, d'éditer cette image à l'aide de l'applet puis de visualiser le texte qui défile en surbrillance et superposition de l'image.

Selon des modes particuliers de réalisations :
L'utilisateur a la possibilité d'éditer une image et de pouvoir la renseigner à l'aide d'un champ texte et de différents mots clés. Ces mots clés sont représentés sous la forme d'un ou plusieurs menus. Ces menus sont intégrés à l'applet.
Le dispositif sera par la suite adapté dans une version pour ordinateur compact et portable. L'utilisateur aura la possibilité d'accéder au réseau public
Internet et d'échanger ou réceptionner des images selon les procédés énoncés.

Les dessins annexés illustrent l'invention :

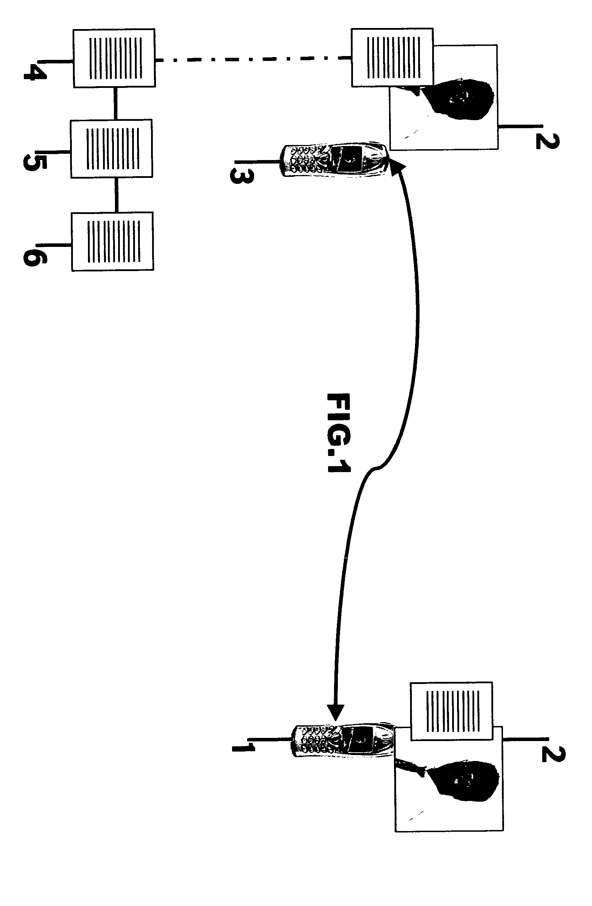

La figure 1 représente le premier dispositif de l'invention.
La figure 2 représente le deuxième dispositif de l'invention.
En référence à ces dessins, la figure 1 représente le dispositif permettant à l'utilisateur ( 1 ) équipés d'un téléphone mobile avec appareil photo, de prendre une prise de vue et de renseigner l'image ( 2 ).

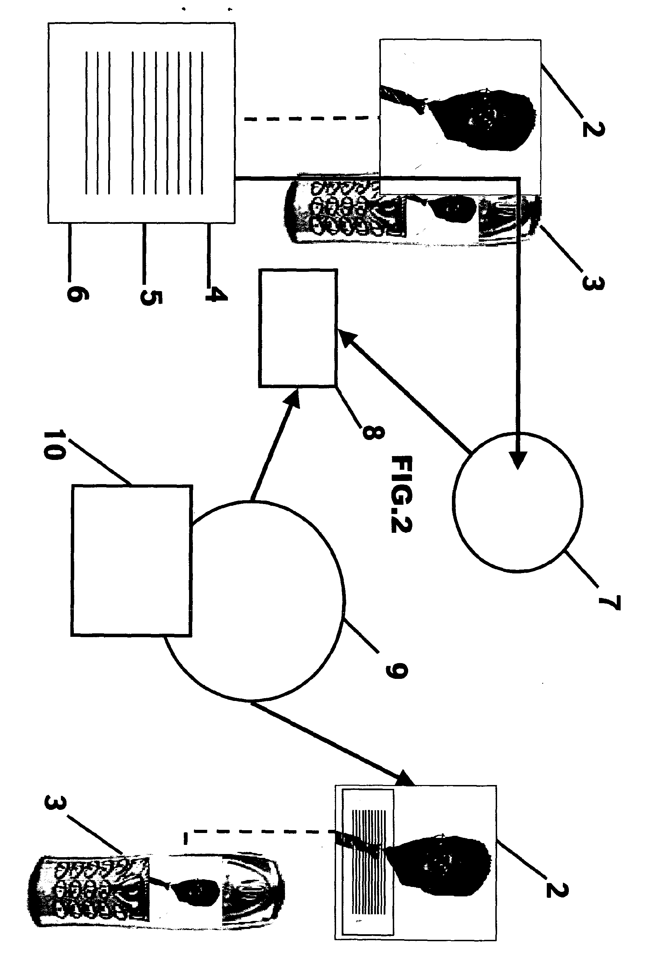

Lorsque l'utilisateur ( 1 ) renseigne l'image ( 2 ) à l'aide de l'applet, il utilise un menu. Ce menu est composé par des libellés de saisie.
Le fichier de l'image ( 2 ) est constitué de la description XML (4), du texte représentant le sujet de l'image ( 5 ) et des métadonnées descriptif de l'image ( 6 ). La description XML ( 4 ) est constituée de caractères et organisée sous forme de tags.
le texte représentant le sujet de l'image ( 5 ) définit la structure permettant d'accueillir et d'organiser les métadonnées descriptif de l'image ( 6 ). Les métadonnées descriptif de l'image ( 6 ) décrivent la ressource, c'est à dire les mots clés de l'image ( 2 ).
L'exemple-ci -dessous montre l'image ( 2 ) dont le fichier contient une description Xml ( 4 ), le texte représentant le sujet de l'image ( 5 ) et les métadonnées descriptif de l'image ( 6 ). 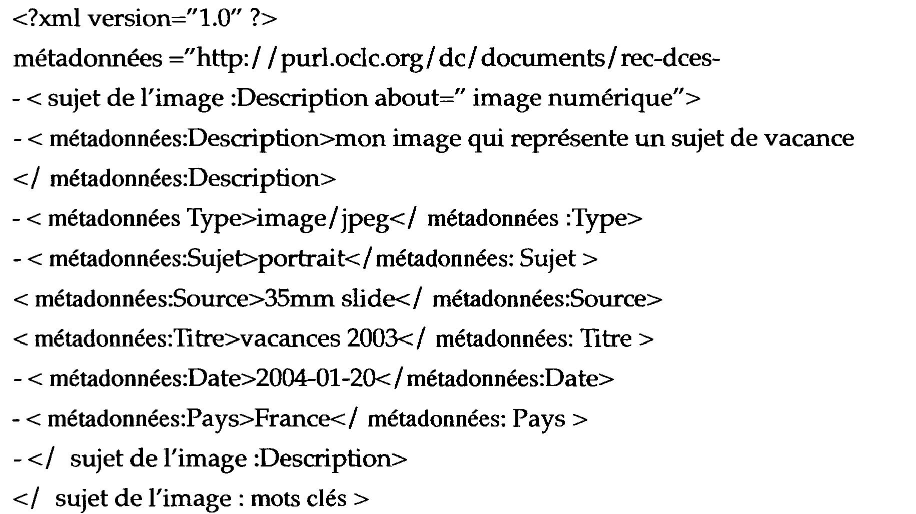 La figure 2 représente le dispositif pour l'extraction automatique du texte en superposition de l'image ( 2 ). Il comporte le parseur XML ( 7 ) qui permet dans un premier temps d'analyser la description XML ( 4 ), le texte représentant le sujet de l'image ( 5 ) et les Les métadonnées descriptif de l'image ( 6 ) de l'image ( 2 ), puis dans un second temps d'effectuer l'extraction des données ( 4 ), ( 5 ), ( 6 ) dans le fichier XML ( 8 ).
Le processeur XSL ( 9 ) effectue la mise en forme du fichier XML ( 8 ) à partir de la feuille de style XSL ( 10 ). Le processeur XSL ( 9 ) procède à l'extraction automatique du texte à partir du fichier XML ( 8 ) en superposition de l'image ( 2 ).
Le processeur XSL ( 9 ) applique ensuite un mode de défilement automatique du texte, en superposition de l'image ( 2 ).
Selon une variante non illustrée, Le processeur XSL ( 9 ) procède à l'extraction automatique du texte à partir du fichier XML ( 8 ) de l'image ( 2 ), dans un fichier texte qui est compatible avec les ordinateurs compact et portable.

Dans la forme de réalisation selon la figure 2, Le langage XSL permet de mettre en forme le fichier XML ( 8 ) en appliquant une feuille de style (10) (polices, corps, couleur, interlignage texte, justification, alignement). L'architecture de développement pour l'applet, le parseur XML ( 7 ), et le processeur XSL ( 9 ) est de type java et J2ME.
Ce langage de programmation est en général le mieux adapté et le plus utilisé pour les téléphones mobiles. Néanmoins tous les langages de programmation de même type peuvent être utilisé.

Le dispositif selon l'invention est particulièrement destinés à l'échange et réception d'images entre deux téléphones mobiles permettant par exemple :
- La réception d'une image accompagnée du texte qui défile en superposition de l'image.
Un Cv que l'on envoie à un recruteur sous forme d'image et texte
- la possibilité de lire une quantité importante d'informations sur un petit écran comme par exemple celui d'un téléphone mobile et sur une seule ligne tout en visualisant l'image correspondant à cette information.

## Revendications

1. Système d' émission et/ ou de réception d'un fichier multimédia par un téléphone mobile équipé ou non d'un appareil photo numérique **caractérisé par** l'extraction des données texte dudit fichier multimédia et la superposition à l'image ( 2 ) d'un texte correspondant aux dites données textes de manière automatique avec un mode de défilement manuel ou automatisé au travers d'un logiciel ou applet de type java, embarqué dans le téléphone mobile de celui desdits au moins deux utilisateurs qui émet et/ou réceptionne ledit fichier multimédia.

2. Système selon la revendication 1 **caractérisé en ce qu'**il permet à l'utilisateur ( 1 ) d'effectuer une prise de vue à l'aide de son téléphone mobile, d'éditer, de renseigner l'image ( 2 ) sous forme de texte à l'aide de l'applet qui comporte un menu de saisie et des libellés texte, le texte étant enregistré dans le fichier de L'image ( 2 ) sous la forme d'un document de type XML ou autre, et le document XML de l'image ( 2 ) comprenant la description de type XML ( 4 ), le texte représentant le sujet de l'image ( 5 ) et Les métadonnées descriptif de l'image (6).

3. Système selon la revendication 2 **caractérisé en ce que** l'utilisateur ( 3 ) réceptionne l'image ( 2 ) et l'édite manuellement partir de l'applet, le fichier de l'image ( 2 ) comprend ; la description de type Xml ( 4 ), le texte représentant le sujet de l'image ( 5 ) ainsi que des métadonnées descriptif de l'image ( 6 ), le principe d'extraction du texte de l'image ( 2 ) étant le suivant : le parseur de type XML ( 7 ) effectue le contrôle, la validation puis l'extraction automatique de la description de type Xml ( 4 ), du texte représentant le sujet de l'image ( 5 ) et des métadonnées descriptif de l'image ( 6 ) de l'image ( 2 ), dans un fichier de type XML destination ( 8 ), le processeur de type XSL ( 9 ) applique ensuite une feuille de style XSL ( 10 ) au fichier de type XML destination ( 8 ) puis le processeur XSL ( 9 ) procède ensuite de manière automatique à l'extraction du texte contenu dans le fichier XML de destination ( 8 ) en superposition de l'image ( 2 ), le processeur de type XSL ( 9 ) applique par la suite un mode de défilement automatique du texte sur l'image ( 2 ).

4. Système selon la revendication 3 **caractérisé par** la possibilité pour l'utilisateur ( 3 ) d'effectuer un mode de défilement manuel ou automatique du texte en superposition de l'image ( 2 ), l'utilisateur ( 3 ) peux effectuer le réglage du contraste et de la luminosité de l'image ( 2 ) ou du texte.

5. Système selon l'une quelconque des revendications précédentes
**caractérisé** selon une variante non illustrée, par la possibilité d'adapter dans une version pour ordinateur compact et portable les dispositifs de l'invention, l'utilisateur aura la possibilité d'accéder au réseau public Internet et d'échanger ou réceptionner l'image ( 2 ), d'extraire de manière automatique selon les procédés énoncés, le contenu du fichier de type XML de destination ( 8 ) dans un fichier texte.
